# EUROPÄISCHE PATENTSCHRIFT

(11) **EP 1 557 114 B1**
(45) Veröffentlichungstag und Bekanntmachung des Hinweises auf die Patenterteilung: **02.11.2006**
(21) Anmeldenummer: 05000433.2
(22) Anmeldetag: 12.01.2005
(51) Int. Cl.: A47C 3/30

(54) **Höhenverstellbare Stuhl-Säule**
Height adjustable chair column
Colonne de chaise réglable en hauteur

(30) Priorität: 24.01.2004 DE 102004003623; 12.04.2004 DE 102004023335
(43) Veröffentlichungstag der Anmeldung: 27.07.2005
(73) Patentinhaber: SUSPA Holding GmbH, 90518 Altdorf (DE)
(72) Erfinder: Böhm, Walter, 90537 Feucht (DE); Kastner, Helmut, 92259 Neukirchen (DE); Knaust, Holger, 92245 Kümmersbruck (DE); Wunderling, Gerhard, 91257 Pegnitz (DE)
(74) Vertreter: Rau, Manfred

(56) Entgegenhaltungen:
- GB-A- 1 217 263
- US-A- 4 871 149
- US-A- 5 806 828
- US-B1- 6 315 262

## Beschreibung

Die Erfindung betrifft eine höhenverstellbare Stuhl-Säule nach dem Oberbegriff des Anspruchs 1.

Bei einer derartigen aus der DE 195 28 645 C1 (entsprechend US-Patent 5,806,828) bekannten Stuhl-Säule ist das Grundproblem, bei Entlastung einer Stuhl-Säule, d. h. bei Entlastung des Stuhlsitzes, den Stuhlsitz wieder in seine hochgefahrene Position zu verbringen, gelöst. Ein derartiges Bedürfnis kann beispielsweise bei Saal-Bestuhlungen auftreten, wobei dann manchmal auch noch die Stuhlsitze in eine Mittelposition zurückgeschwenkt werden sollen. Bei der bekannten Stuhl-Säule ist einerseits das übliche Ventil vorgesehen, mittels dessen die normale Höhenverstellung und -einstellung erfolgt, wenn der Benutzer auf dem Stuhl sitzt. Im Kolben ist eine automatisch wirkende Blockiereinrichtung angeordnet, die bei Entlastung des Gehäuses relativ zum Standrohr öffnet. Diese bekannte Ausgestaltung ist verhältnismäßig aufwändig.

Der Erfindung liegt die Aufgabe zugrunde, eine höhenverstellbare Stuhl-Säule der gattungsgemäßen Art so auszugestalten, dass ein selbsttätiges Ausfahren des Gehäuses aus dem Standrohr bei Entlastung des Gehäuses mit besonders einfachen Mitteln erreicht wird.

Diese Aufgabe wird erfindungsgemäß durch die Merkmale im Kennzeichnungsteil des Anspruches 1 gelöst. Das Lösungsprinzip nach der Erfindung liegt darin, dass nicht eine zweite Blockier-Einrichtung vorgesehen sein muss, die bei Entlastung des Gehäuses relativ zum Standrohr selbstständig öffnet, sondern dass das Ventil selber so ausgebildet ist, dass es bei dieser Entlastung öffnet. Durch die vorteilhafte Ausgestaltung nach Anspruch 2 wird hierbei erreicht, dass beiderseits der Schließ-Elemente unterschiedliche Kräfte auf den Ventil-Stift einwirken, die je nach Belastung oder Entlastung des Gehäuses das Ventil geschlossen halten oder öffnen.

Bei einer ersten vorteilhaften Ausgestaltung des Ventils kann das Öffnen des Ventils in besonders einfacher Weise dadurch erreicht werden, dass die ohnehin vorhandene und notwendige Dichtung zwischen Ventilkörper und Dicht-Element in besonderer Weise als Lippen-Dichtung ausgebildet wird, die bei Belastung des Gehäuses relativ zum Standrohr dichtend gegen das Schließ-Element gedrückt wird und die bei Entlastung des Gehäuses von diesem abgehoben wird, so dass die Teil-Gehäuseräume miteinander verbunden werden. Bei dieser Ausgestaltung kann in besonders einfacher Weise noch ein zusätzlicher Drosselspalt vorgesehen werden, der nur wirksam ist, wenn das Gehäuse bei entsprechender Entlastung selbsttätig aus dem Standrohr ausgefahren wird, so dass diese Ausfahrbewegung langsam vonstatten geht, während die normale Höhen-Verstellung unter Last bei manueller Betätigung des Ventils schneller vonstatten geht.

Bei einer zweiten Ausführungsform der Erfindung ist der Ventil-Stift mittels einer Feder belastet, die so dimensioniert ist, dass sie bei entlastetem Gehäuse den Ventil-Stift in die Ventil-Öffnungs-Stellung schiebt, während bei belastetem Gehäuse ihre Kraft hierzu nicht ausreicht.

Bei einer dritten Ausführungsform der Erfindung ist im Schließ-Element des Ventil-Stiftes ein Kanal ausgebildet, dem eine verschiebbare Dichtung zugeordnet ist, die je nach Belastungszustand der Gasfeder so verschoben wird, dass die Verbindung zwischen den Teil-Gehäuseräumen hergestellt oder geschlossen wird.

Weitere Merkmale, Vorteile und Einzelheiten der Erfindung ergeben sich aus der nachfolgenden Beschreibung von zwei Ausführungsbeispielen anhand der Zeichnung. Es zeigt
- Fig. 1: einen Längsschnitt durch eine aus einer längenverstellbaren Gasfeder und einem Standrohr gebildete Stuhl-Säule in eingefahrenem Zustand,
- Fig. 2: die Stuhl-Säule nach Fig. 1 in ausgefahrenem Zustand,
- Fig. 3: eine Rückdreh-Einrichtung der Stuhl-Säule in perspektivischer Explosionsdarstellung,
- Fig. 4: eine erste Ausführungsform eines Ventils der Gasfeder im Längsschnitt in geschlossenem Zustand,
- Fig. 5: das Ventil nach Fig. 4 in manuell geöffnetem Zustand,
- Fig. 6: das Ventil nach Fig. 4 und 5 in selbsttätig geöffnetem Zustand,
- Fig. 7: eine zweite Ausführungsform eines Ventils im Längsschnitt in geschlossenem Zustand,
- Fig. 8: das Ventil nach Fig. 7 in manuell geöffnetem Zustand,
- Fig. 9: das Ventil nach Fig. 7 und 8 in selbsttätig geöffnetem Zustand,
- Fig. 10: eine dritte Ausführungsform eines Ventils im Längsschnitt in geschlossenem Zustand,
- Fig. 11: das Ventil nach Fig. 10 in manuell geöffnetem Zustand und
- Fig. 12: das Ventil nach Fig. 10 und 11 in selbsttätig geöffnetem Zustand.

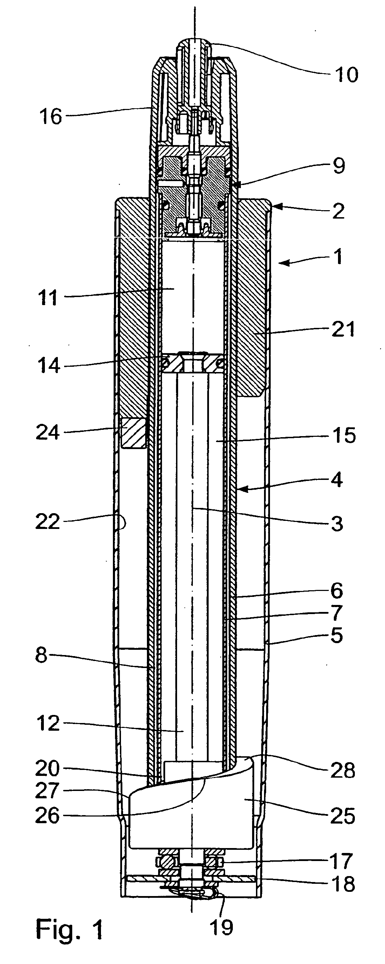

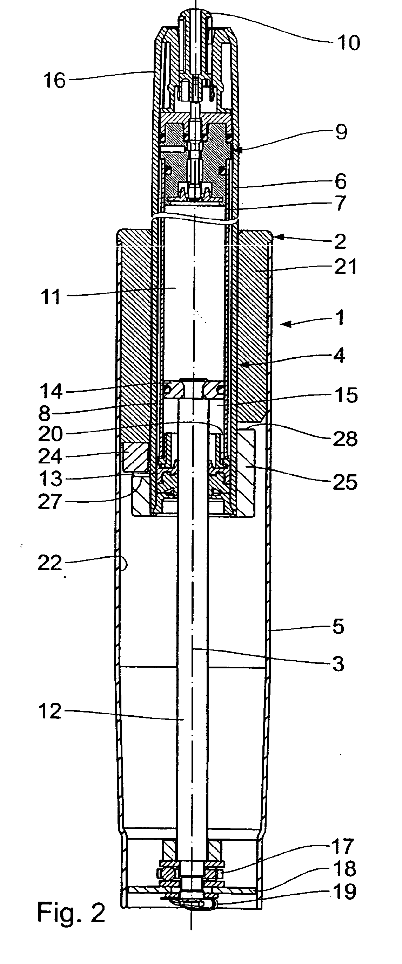

Die in der Zeichnung, und zwar insbesondere in Fig. 1 und 2 dargestellte Stuhl-Säule weist ein Standrohr 1 und eine in diesem mittels einer Führungsbüchse 2 geführte, in Richtung einer gemeinsamen Mittel-Längs-Achse 3 verschiebbare längenverstellbare Gasfeder 4 auf. Das Standrohr 1 weist an seinem unteren Ende einen Halte-Konus 5 zur Befestigung in einem üblichen Stuhl-Fußgestell auf.

Die Gasfeder 4 weist ein im Wesentlichen zylindrisches Gehäuse 6 auf, das in der Führungsbüchse 2 geführt ist. Konzentrisch zur Achse 3 ist im Gehäuse 6 ein Innen-Rohr 7 angeordnet, zwischen dem und dem Gehäuse 6 ein Ringkanal 8 ausgebildet ist. An dem außerhalb des Standrohres 1 befindlichen oberen Ende des Gehäuses 6 ist in diesem ein Ventil 9 angeordnet, das mittels eines aus dem Gehäuse 6 herausragenden Betätigungs-Stiftes 10 betätigbar ist. Es dient zur wahlweisen Verbindung des Ringkanals 8 mit dem dem Ventil 9 benachbarten, im Innen-Rohr 7 ausgebildeten ersten Teil-Gehäuseraum 11.

Im Innen-Rohr 7 ist eine Kolbenstange 12 konzentrisch zur Achse 3 und in deren Richtung verschiebbar angeordnet, die an dem dem Ventil 9 entgegengesetzten, im Standrohr 1 befindlichen unteren Ende des Gehäuses 6 aus diesem herausgeführt ist. Sie ist in diesem Bereich mittels einer Führungs-Dichtungs-Einheit 13 gasdicht geführt. Am im Innen-Rohr 7 befindlichen Ende der Kolbenstange 12 ist an dieser ein Kolben 14 angebracht, der abgedichtet am Innen-Rohr 7 geführt ist. Er trennt den ersten Teil-Gehäuseraum 11 von einem zwischen dem Kolben 14 und der Führungs-Dichtungs-Einheit 13 ausgebildeten zweiten Teil-Gehäuseraum 15. An dem dem Ventil 9 benachbarten Ende des Gehäuses 6 ist an diesem ein sich konusförmig verjüngender Befestigungsabschnitt 16 ausgebildet, mittels dessen die Gasfeder 4 an einer entsprechenden Aufnahme an der Unterseite eines Stuhlsitzes, beispielsweise also einem Stuhlsitzträger, befestigbar ist. An ihrem unteren, außerhalb des Gehäuses 6 liegenden Ende ist die Kolbenstange 12 über ein Axial-Lager 17 am Boden 18 des Standrohres 1 abgestützt und dort mittels einer Befestigungs-Klammer 19 lösbar befestigt.

Der Ringkanal 8 und die Teil-Gehäuseräume 11 und 15 sind mit Gas unter verhältnismäßig hohem Druck und gegebenenfalls einer vorgegebenen Menge Öl gefüllt. Der zweite Teil-Gehäuseraum 15 ist an der Führungs-Dichtungs-Einheit 13 mittels eines Überström-Kanals 20 ständig mit dem Ringkanal 8 verbunden. Der gesamte Aufbau und die Funktionsweise der Gasfeder 4 sind ― soweit bisher beschrieben ― allgemein bekannt, beispielsweise aus dem grundlegenden Patent DE 18 12 282 (entsprechend US 3,656,593). Entsprechend ist der grundsätzliche Aufbau und die Funktionsweise der Stuhlsäule aus dem Patent DE 19 31 021 bekannt.

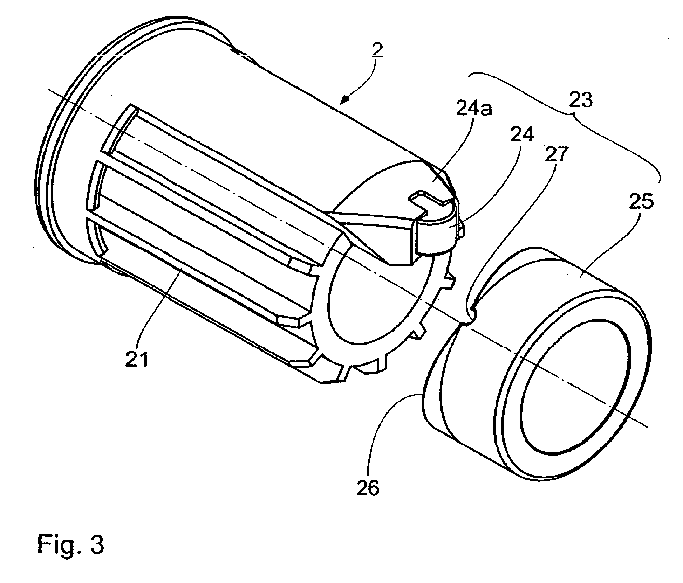

Die insbesondere in Fig. 3 aber auch den Fig. 1 und 2 dargestellte Führungsbüchse 2 weist an ihrer Außenseite Längs-Rippen 21 auf, mittels derer sie sich an der Innenwand 22 des Standrohres 1 radial zur Achse 3 abstützt. Die Stuhl-Säule ist mit einer Rückdreh-Einrichtung 23 versehen, mittels derer das Gehäuse 6 der Gasfeder 4 in gemäß Fig. 2 ausgefahrenem Zustand in eine vorgegebene Dreh-Stellung gegenüber dem Standrohr 1 gebracht wird. Diese Einrichtung 23 weist eine an dem im Standrohr 1 befindlichen Ende der Führungsbüchse 2 gelagerte Rolle 24 als Führungs-Element und ein mit dem Gehäuse 4 der Gasfeder fest verbundenes ringförmiges Drehführungs-Teil 25 mit einer Führungsfläche 26 auf. Die Rolle 24 ist in eine am unteren Ende der Führungsbüchse 2 ausgebildete Aufnahme 24a elastisch eingerastet, ist dort aber frei drehbar gelagert. Die Aufnahme 24a mit der Rolle 24 bildet ein weiteres Drehführungs-Teil.

Die Führungsfläche 26 weist einen durch eine Ausnehmung 27 gebildeten Mittel-Stellungs-Bereich auf, an dem die Rolle 24 in der weitest aus dem Standrohr 1 ausgeschobenen Stellung des Gehäuses 4 zur Anlage kommt. Die Führungsfläche 26 steigt von diesem Mittel-Stellungs-Bereich 27 bis zu einem dem Bereich 27 diametral gegenüberliegenden Außen-Stellungs-Bereich 28 an. Von dem Bereich 27 steigt die Führungsfläche 26 also sowohl im Uhrzeigersinn als auch im Gegenuhrzeigersinn an. Wenn das Gehäuse 6 bei geöffnetem Ventil 9 aus dem Standrohr 1 ausgeschoben wird, kommt die Führungsfläche 26 in irgendeiner Stellung zur Anlage an der Rolle 24. Da durch die Steigung der Führungsfläche 26 gegenüber der Achse 3 und durch die zwischen der Führungsfläche 26 und der Rolle 24 wirkende Ausschubkraft auch eine Tangentialkomponente dieser Kraft erzeugt wird, wird das Gehäuse 4 in der Endphase der Ausschubbewegung in der Weise gedreht, dass der Mittel-Stellungs-Bereich 27 unter die Rolle 24 gerät. Die Bezeichnung "Mittel-Stellungs-Bereich 27" rührt daher, dass ein Stuhl-Sitz auf dem Befestigungsabschnitt 16 der Gasfeder 4 so befestigt wird, dass er bei der Anlage der Rolle 24 im Bereich 27 sich in einer ausgerichteten Mittel-Stellung befindet. Der Sitz wird also beim vollständigen Ausfahren des Gehäuses 6 aus dem Standrohr 1 immer in seine ausgerichtete Mittel-Stellung verbracht. Dies ist im Prinzip bekannt, beispielsweise aus der DE 195 28 645 C1 (entsprechend US-Patent 5,806,828). Die Ausnehmung 27 ist im Mittel-Stellungs-Bereich in der Führungsfläche 26 angebracht, um die Fixierung in dieser Mittel-Stellung noch zu verbessern. Die Rolle 24 rastet gleichsam in die Ausnehmung 27 ein.

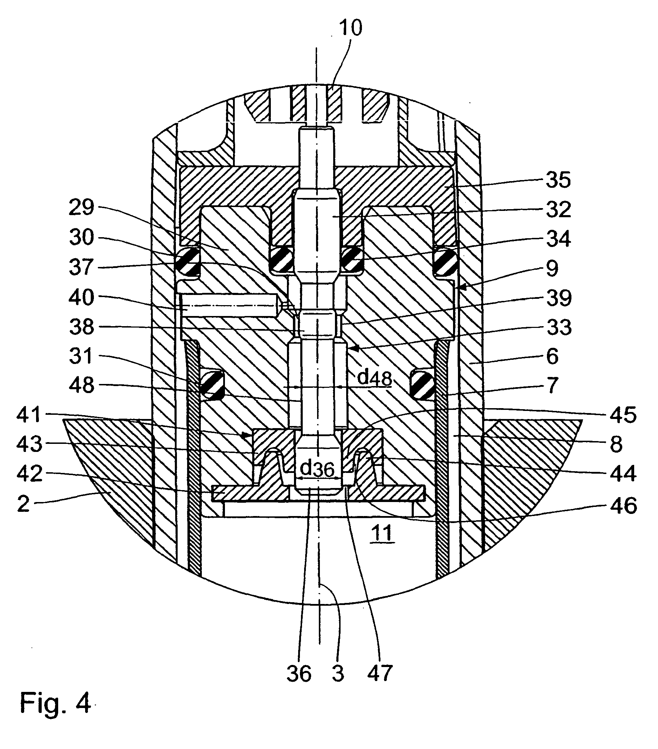

Eine Ausführungsform des Ventils 9 ist in den Fig. 4 bis 6 dargestellt. Es weist einen Ventilkörper 29 auf, der an seinem dem Betätigungs-Stift 10 zugewandten Ende mittels einer Dichtung 30 den gesamten Innenraum des Gehäuses 6 gasdicht nach außen abdichtet. Dem ersten Teil-Gehäuseraum 11 zugewandt ist eine weitere Dichtung 31 vorgesehen, die den ersten Teil-Gehäuseraum 11 zum Ringkanal 8 hin gasdicht abdichtet. Im Ventilkörper 29 ist koaxial zur Mittel-Längs-Achse 3 ein Ventilstift 32 in einem durchgehenden Ventil-Kanal 33 in Richtung der Achse 3 verschiebbar angeordnet. In dem dem Betätigungs-Stift 10 benachbarten äußeren Bereich ist der Ventil-Kanal 33 mittels einer Dichtung 34 gasdicht nach außen abgedichtet, die einerseits am Ventilkörper 29 und andererseits am Ventil-Stift 32 anliegt. Die Dichtungen 30 und 34 werden mittels eines am Ventilkörper 29 befestigten äußeren Deckels 35 in ihrer Position gehalten. Dieser Deckel 35 dient gleichzeitig auch als Ausschubsicherung für den Ventil-Stift 32.

An seinem dem ersten Teil-Gehäuseraum 11 zugewandten Ende weist der Ventil-Stift 32 einen Ventil-Kopf 36 als Schließ-Element auf. Zwischen der äußeren Dichtung 34 und dem Ventil-Kopf 36 ist ein Drossel-Spalt 37 ausgebildet, der durch einen Drossel-Wulst 38 des Ventil-Stiftes 32 und eine Verengung 39 des Ventil-Kanals 33 begrenzt wird. Zwischen dem Drossel-Spalt 37 und der äußeren Dichtung 34 mündet in den Ventil-Kanal 33 ein Verbindungs-Kanal 40 ein, der den Ring-Kanal 8 mit dem Ventil-Kanal 33 verbindet. Er ist so dimensioniert, dass er auf durchströmendes Druckgas eine nur leichte Drosselwirkung auswirkt.

In der Nähe des ersten Teil-Gehäuseraums 11 ist im Ventilkörper 29 eine Dichtung 41 angeordnet, die mittels eines dem ersten Teil-Gehäuseraum 11 zugewandten Stützrings 42 am Ventilkörper 29 axial festgehalten wird. Diese Dichtung 41 ist als Doppel-Lippen-Dichtung ausgebildet, deren äußere ringförmige Dicht-Lippe 43 ständig fest gegen den Ventil-Körper 29 anliegt, worin sie durch einen ringförmigen Stützsteg 44 des Stützrings 42 unterstützt wird. Die Dichtung 41 weist weiterhin eine ringförmige innere Dicht-Lippe 45 auf, die ebenfalls dem ersten Teil-Gehäuseraum 11 zugewandt ist. In der Stellung des Ventils 9 gemäß Fig. 4, in der die innere Dicht-Lippe 45 dichtend gegen den Ventil-Kopf 36 anliegt, ist zwischen dem Stützsteg 44 und der inneren Dicht-Lippe 45 ein ringförmiger Freiraum 46 ausgebildet. Zwischen dem zylindrisch ausgebildeten Ventil-Kopf 36 und dem Stützring 42 ist ein großer ringförmiger Überström-Spalt 47 ausgebildet. Der Durchmesser d₃₆ des Ventil-Kopfes 36 ist größer als der Durchmesser d₄₈ des Ventil-Stift-Abschnitts 48 zwischen dem Ventil-Kopf 36 und dem Drossel-Wulst 38.

In einer beliebig eingestellten Höhen- bzw. Längen-Position der Stuhl-Säule befindet sich das Gehäuse 6 der Gasfeder 4 beispielsweise in einer Position gemäß Fig. 1. Das Ventil 9 ist geschlossen. Der Ventil-Stift 32 befindet sich in der Position gemäß Fig. 4. Da aufgrund der Belastung von oben auf das Gehäuse 6 durch eine beispielsweise auf einem Stuhl sitzenden Person der Gasdruck im ersten Teil-Gehäuseraum 11 größer ist als im zweiten Teil-Gehäuseraum 15, wird die innere Dicht-Lippe 45 fest gegen den Ventil-Kopf 36 gedrückt; das Ventil 9 ist dicht geschlossen. Eine Längen-Verstellung der Gasfeder 4 findet nicht statt.

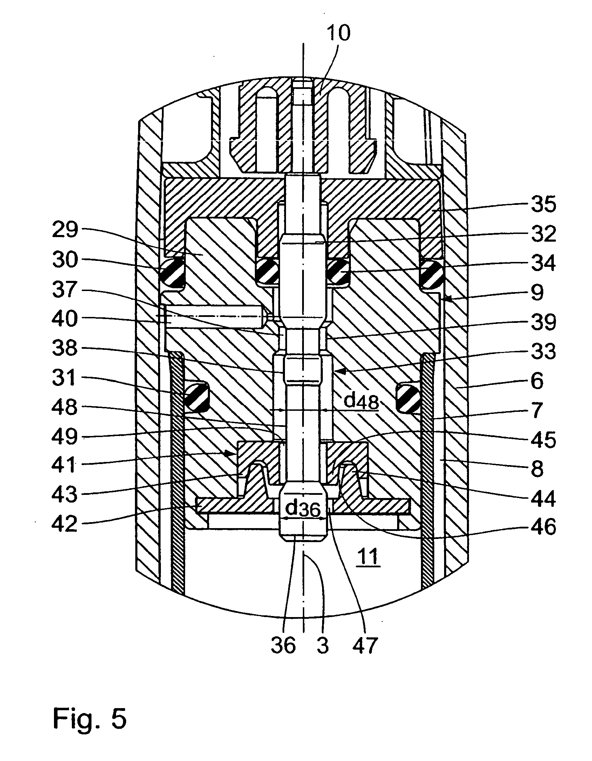

Wenn durch Eindrücken des Betätigungs-Stiftes 10 der Ventil-Stift 32 in Richtung zum ersten Teil-Gehäuseraum 11 verschoben wird, wie es in Fig. 5 dargestellt ist, dann hebt der Ventil-Kopf 36 von der inneren Dicht-Lippe 45 der Dichtung 41 ab. Außerdem wird der Drossel-Wulst 38 aus der Verengung 39 herausgeschoben, so dass der Drossel-Spalt 37 aufgehoben wird. Wie Fig. 5 erkennen lässt, kann eine freie Durchströmung des Gases vom Ring-Kanal 8 zum ersten Teil-Gehäuseraum 1 und umgekehrt stattfinden, wobei lediglich - wie bei jeder Öffnung des Ventils 9 - eine leichte Drosselung im Verbindungs-Kanal 40 erfolgt. Auf diese Weise erfolgt eine Höheneinstellung der Stuhl-Säule. Durch Loslassen des Betätigungs-Stiftes 10 wird aufgrund des Gasdruckes im ersten Teil-Gehäuseraum 11 der Ventil-Stift 32 nach außen geschoben und das Ventil 9 wieder geschlossen.

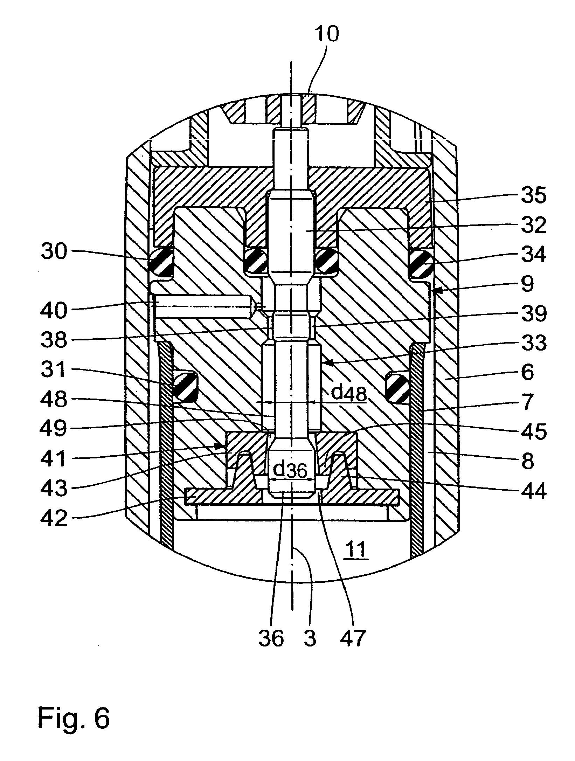

Wenn dagegen bei an sich geschlossenem Ventil 9, also in der Position des Ventil-Stiftes 32 gemäß Fig. 4, die Stuhl-Säule entlastet wird, also die von oben während der Benutzung auf das Gehäuse 6 ausgeübte Kraft entfällt, dann sinkt der Druck im ersten Teil-Gehäuseraum 11 ab, so dass eine Druckdifferenz zwischen dem ersten Teil-Gehäuseraum 11 und dem zweiten Teil-Gehäuseraum 15 entsteht, die über den Ring-Kanal 8 und den Verbindungs-Kanal 40 auch auf den Ventil-Stift 32 wirkt. Der höhere Druck im zweiten Teil-Gehäuseraum 15 wirkt somit vom Drossel-Spalt 37 her auf die innere Dicht-Lippe 45 der Dichtung 41 und hebt diese entsprechend der Darstellung gemäß Fig. 6 vom Ventil-Kopf 36 ab, ohne dass der Ventil-Stift 32 in Richtung der Achse 3 verschoben wird. Der Druckausgleich findet dadurch statt, dass nunmehr aus dem zweiten Teil-Gehäuseraum 15, über den Ring-Kanal 8, den Verbindungs-Kanal 40, den Drossel-Spalt 37 und den zwischen dem Ventil-Kopf 36 und der inneren Dicht-Lippe 45 gebildeten Ausgleichs-Kanal 49 Gas in den ersten Teil-Gehäuseraum 11 strömt. Da die freie Querschnittsfläche des ersten Teil-Gehäuseraums 11 größer ist als die des zweiten Teil-Gehäuseraums 15, wird bei Druckgleichheit in beiden Teil-Gehäuseräumen 11, 15 die Kolbenstange 12 aus dem Gehäuse 6 ausgeschoben, letzteres also aus dem Standrohr 1 nach oben verfahren. Bei Entlastung, beispielsweise eines auf dem Gehäuse 6 angebrachten Stuhl-Sitzes wird also das Gehäuse 6 und damit auch der Stuhl-Sitz automatisch in seine obere Position verfahren und außerdem in seine Mittelstellung gedreht, wie oben bereits beschrieben wurde.

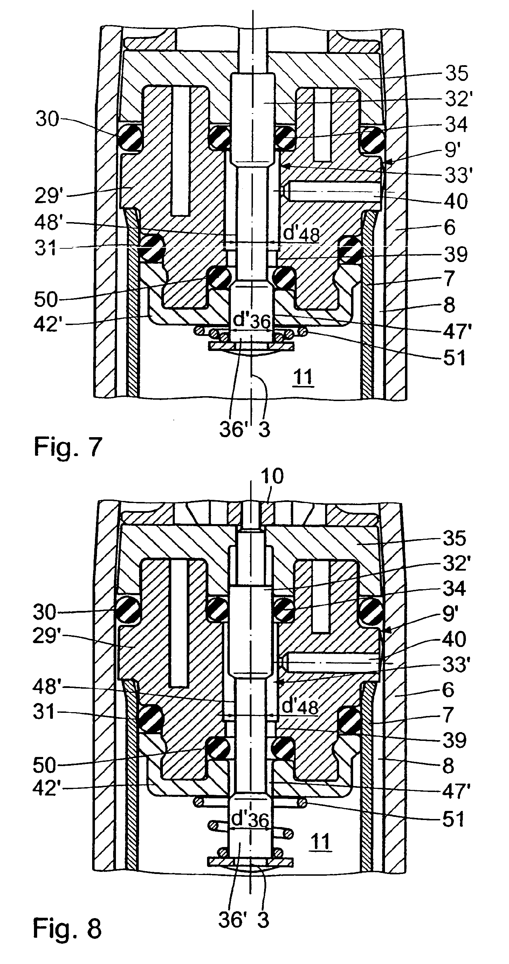

Soweit bei der zweiten Ausführungsform eines erfindungsgemäßen Ventils 9' nach den Fig. 7 bis 9 gleiche Teile wie bei der Ausführungsform nach den Fig. 4 bis 6 vorhanden sind, werden dieselben Bezugsziffern verwendet. Soweit funktionell gleiche, konstruktiv aber geringfügig abweichende Teile vorhanden sind, werden diese mit derselben Bezugsziffer jedoch mit einem hochgesetzten Strich bezeichnet. In keinem Fall bedarf es einer ausdrücklichen erneuten Beschreibung.

Zwischen dem Ventil-Kopf 36' und dem Ventil-Körper 29' ist eine als Ringdichtung ausgebildete Dichtung 50 angeordnet, die mittels eines Stützrings 42' in ihrer Position gehalten wird. Bei geschlossenem Ventil 9', also bei nicht verschobenen Ventil-Stift 32' liegt sie immer gegen den Ventil-Kopf 36' an. Außerhalb des Ventil-Körpers 29' ist der Ventil-Stift 32' durch eine vorgespannte Druck-Feder 51 in Form einer Kegel-Feder in Richtung zum ersten Teil-Gehäuseraum 11 hin belastet. Die Druck-Feder 51 wirkt also in Öffnungsrichtung des Ventil-Stiftes 32'. Bei geschlossenem Ventil 9' und von oben über einen Stuhl-Sitz belastetem Gehäuse 6 ist der Druck im ersten Teil-Gehäuseraum 11 höher als im zweiten Teil-Gehäuseraum 15. Außerdem ist der Durchmesser d'₃₆ des Ventil-Kopfes 36' größer als der Durchmesser d' ₄₈ des Ventil-Stift-Abschnitts 48'. Die Druck-Feder 51 ist so dimensioniert und vorgespannt, dass sie eine geringere Öffnungskraft auf den Ventil-Stift 32' ausübt, als die durch die geschilderten Druckdifferenzen und Querschnittsdifferenzen ausgeübte resultierende Gasdruck-Kraft.

Wenn gemäß Fig. 8 das Ventil 9' durch Eindrücken des Betätigungs-Stiftes 10 und damit durch das Einschieben des Ventil-Stiftes 32' in Richtung zum ersten Teil-Gehäuseraum 11 geöffnet wird, dann hebt - wie Fig. 8 erkennen lässt - der Ventil-Kopf 36' von der Dichtung 50 ab, so dass Gas aus dem ersten Teil-Gehäuseraum 11 durch einen Überström-Spalt 47' zwischen dem Stützring 42' und dem Ventil-Kopf 36', den Ventil-Kanal 33' im Bereich des verjüngten Ventil-Stift-Abschnitts 48', den Verbindungs-Kanal 40, den Ringkanal 8 und den Überström-Kanal 20 zum zweiten Teil-Gehäuseraum 15 und umgekehrt strömen kann. Auf diese Weise wird die übliche Höhenverstellung der Stuhl-Säule vorgenommen, wobei der Benutzer auf dem vom Gehäuse 6 getragenen Sitz sitzt.

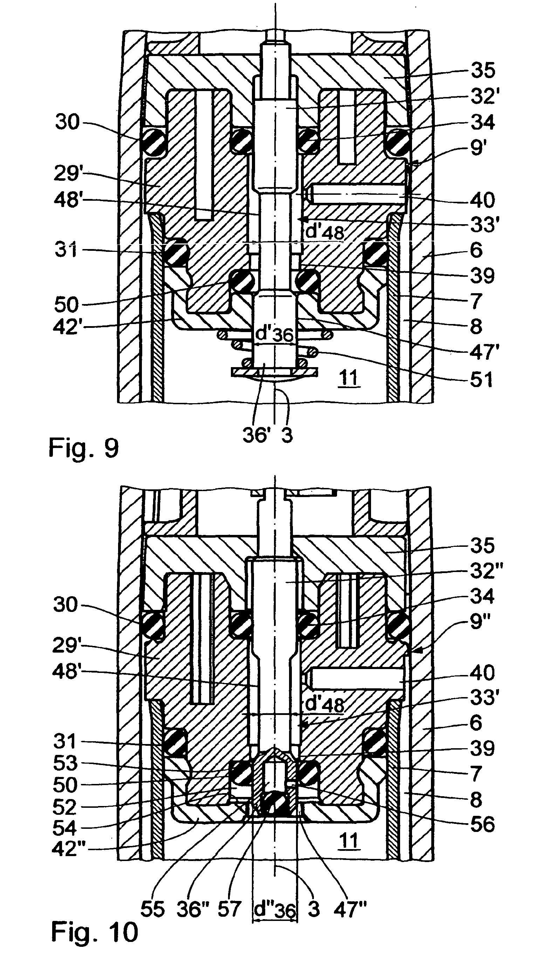

Wenn dagegen entsprechend der Darstellung in Fig. 9 das Gehäuse 6 vollständig entlastet wird, dann sinkt - wie bereits geschildert - der Druck im ersten Teil-Gehäuseraum 11 ab. Die Druck-Feder 51 kann den Ventil-Stift 32' in Richtung zum ersten Teil-Gehäuseraum 11, also in Öffnungsrichtung, verschieben, wodurch der Ventil-Kopf 36' von der Dichtung 50 abhebt, wodurch ein Druckausgleich in der bereits geschilderten Weise stattfinden kann. Die Druck-Feder 51 ist also so dimensioniert und vorgespannt, dass sie eine Öffnungskraft auf den Ventil-Stift 32' ausübt, die größer ist als die auf diesen noch wirkende Schließkraft.

Soweit bei der dritten Ausführungsform eines erfindungsgemäßen Ventils 9" nach den Fig. 10 bis 12 gleiche Teile wie bei den vorhergehenden Ausführungsformen nach den Fig. 4 bis 6 beziehungsweise 7 bis 9 vorhanden sind, werden dieselben Bezugsziffern verwendet. Soweit funktionell gleiche, konstruktiv aber geringfügig abweichende Teile vorhanden sind, werden diese mit derselben Bezugsziffer, jedoch mit einem hochgesetzten Doppelstrich bezeichnet. In keinem Fall bedarf es einer ausdrücklichen erneuten Beschreibung.

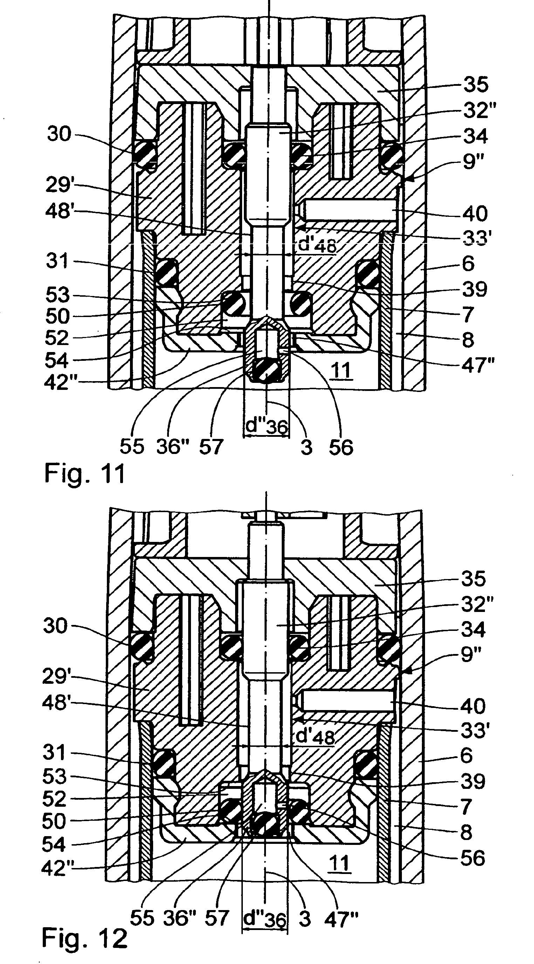

Der Stützring 42" weist keinen in den Ventil-Körper 29' hineinragenden Ringbund auf, so dass im Ventil-Körper 29' benachbart zum Ventil-Kopf 36" ein etwa ringzylindrischer Raum 52 begrenzt wird, in dem die Dichtung 50 angeordnet ist. In diesem Raum 52 kann die Dichtung 50 in Richtung der Mittel-Längs-Achse 3 zwischen zwei Anschlägen, nämlich einem ersten Anschlag 53 und einem zweiten Anschlag 54 verschoben werden, die einerseits durch den Ventil-Körper 29' und andererseits durch den Stützring 42" gebildet werden. Im Ventil-Kopf 36" ist ein koaxial zur Achse 3 verlaufender Überström-Kanal 55 ausgebildet, in den radial zur Achse 3 ein Drossel-Kanal 56 einmündet. Im Überström-Kanal 55 kann zusätzlich ein kugelförmiges Drossel-Element 57 angeordnet sein. In diesem Fall kann der Kanal 56 als Drossel-Kanal ausgebildet sein, muss es aber nicht. Der Drossel-Kanal 56 ist derart angeordnet, dass er bei gemäß der Darstellung in den Fig. 10 und 12 in der Schließstellung befindlichem Ventil-Stift 32" in den Raum 52 mündet.

In der in Fig. 10 dargestellten geschlossenen Stellung des Ventils 9" befindet sich die Dichtung 50 in der Position an dem inneren ersten Anschlag 53 der im Ventil-Körper 29' ausgebildet ist. Die Dichtung 50 dichtet hierbei zwischen dem Ventil-Kopf 36" und dem Ventil-Körper 29' ab, das heißt die Verbindung zwischen dem Ringkanal 8 und dem Teil-Gehäuseraum 11 ist mittels des Ventils 9" geschlossen. Die Gasfeder 4 ist blockiert.

Beim Einschieben des Ventil-Stiftes 32" in Richtung zum Teil-Gehäuseraum 11 hin wird der Ventil-Kopf 36" von der Dichtung 50 abgehoben, wie Fig. 11 erkennen lässt. Die Verbindung zwischen dem Ringkanal 8 und dem Teil-Gehäuseraum 11 wird geöffnet. Die Gasfeder 4 kann in der bereits geschilderten Weise in ihrer Länge verstellt werden. Bis zum Abheben den Ventil-Kopfes 36" von der Dichtung wird letztere aufgrund des vom Teil-Gehäuseraum 11 her wirkenden Gasdrucks in ihrer Stellung am inneren ersten Anschlag 53 gehalten, da vor dem Abheben des Ventil-Kopfes 36' von der Dichtung 50 der Gasdruck über den Überström-Spalt 47" in den Raum 52 hineinwirkt und insofern vollflächig gegen die Dichtung 50 drückt und da der vom zweiten Teil-Gehäuseraum 15 über den Ringkanal 8 auf die Dichtung 50 wirkende Gasdruck geringer ist als der vom ersten Teil-Gehäuseraum 11 her wirkende Gasdruck.

Wenn dagegen - entsprechend der Darstellung in Fig. 12 und vergleichbar zu den Darstellungen in den Fig. 6 und 9 und entsprechend der jeweiligen Beschreibung hierzu - das Gehäuse 6 der Gasfeder 4 entlastet wird, dann wirkt vom unteren Teil-Gehäuseraum 15 über den Ringkanal 8 und den Verbindungs-Kanal 40 ein höherer Gasdruck auf die Dichtung 50 als vom Teil-Gehäuseraum 11 her, so dass die Dichtung aufgrund der erwähnten Druckdifferenz in Richtung zum äußeren zweiten Anschlag 54 am Stützring 42" verschoben wird. In dieser Position der Dichtung 50 wird der Drossel-Kanal 56 und damit auch der Überström-Kanal 55 mit dem Ventil-Kanal 33' verbunden, wodurch wiederum Gas vom Teil-Gehäuseraum 15 über den Ringkanal 8, den Verbindungs-Kanal 40, den Ventil-Kanal 33', den Raum 52, den Drossel-Kanal 56 und den Überström-Kanal 55 in den ersten Teil-Gehäuseraum 11 strömen kann. Die Gasfeder 4 wird gedrosselt, also gedämpft, auseinandergefahren.

## Patentansprüche

1. Höhenverstellbare Stuhl-Säule,
- mit einem Standrohr (1) mit einer Mittel-Längs-Achse (3),
- mit einer im Standrohr (1) koaxial zur Mittel-Längs-Achse (3) angeordneten Gasfeder (4), die
-- ein im Standrohr (1) in Richtung der Mittel-Längs-Achse (3) bis in eine ausgefahrene Stellung verschiebbares, mit einem Druckmedium gefülltes Gehäuse (6),
-- eine im Standrohr (1) festgelegte Kolbenstange (12),
-- einen an der Kolbenstange (12) angebrachten, das Gehäuse in einen ersten Teil-Gehäuseraum (11) und einen von der Kolbenstange (12) durchsetzten zweiten Teil-Gehäuseraum (15) teilenden Kolben (14) und
-- ein Ventil (9, 9', 9") zur Verbindung des ersten und des zweiten Teil-Gehäuseraumes (11, 15) aufweist, das
--- einen Ventil-Körper (29, 29') mit einem koaxial zur Mittel-Längs-Achse (3) verlaufenden Ventil-Kanal (33, 33'),
--- einen im Ventil-Kanal (33, 33') angeordneten, in Richtung zum ersten Teil-Gehäuseraum (11) in eine Öffnungs-Stellung verschiebbaren, Ventil-Stift (32, 32', 32") mit einem Schließ-Element (36, 36', 36") und
--- eine in geschlossenem Zustand des Ventils (9, 9', 9") und bei relativ zum Standrohr (1) belastetem Gehäuse (6) zwischen dem Schließ-Element (36, 36', 36") und dem Ventil-Körper (29, 29') dichtende Dichtung (41, 50) aufweist,
**dadurch gekennzeichnet,**
**dass** das Ventil (9, 9', 9") derart ausgebildet ist, dass es bei Entlastung des Gehäuses (6) relativ zum Standrohr (1) öffnet.

2. Stuhl-Säule nach Anspruch 1, **dadurch gekennzeichnet,**
**dass** das Schließ-Element (36, 36', 36") einen größeren Durchmesser (d₃₆, d'₃₆, d"₃₆) aufweist als ein sich anschließender Ventil-Stift-Abschnitt (48, 48'), der mit dem zweiten Teil-Gehäuseraum (15) ständig in Verbindung steht.

3. Stuhl-Säule nach Anspruch 1 oder 2, **dadurch gekennzeichnet,**
**dass** die Dichtung (41) zwischen Schließ-Element (36) und Ventil-Körper (29) als Lippen-Dichtung mit einer inneren Dicht-Lippe (45) ausgebildet ist, die bei Belastung des Gehäuses (6) relativ zum Standrohr (1) am Schließ-Element (36) anliegt und bei Entlastung des Gehäuses (6) ohne Verschiebung des Ventil-Stiftes (32) vom Schließ-Element (36) abhebt.

4. Stuhl-Säule nach einem der Ansprüche 1 bis 3, **dadurch gekennzeichnet,**
**dass** zwischen dem Ventil-Stift (32) und dem Ventil-Körper (29) ein Drossel-Spalt (37) ausgebildet ist, der bei Verschieben des Ventil-Stiftes (32) in Richtung zur Öffnungs-Stellung geöffnet wird.

5. Stuhl-Säule nach Anspruch 1 oder 2, **dadurch gekennzeichnet,**
**dass** der Ventil-Stift (32') mit einer Feder (51) belastet ist, die den Ventil-Stift (32') bei Entlastung des Gehäuses (6) relativ zum Standrohr (1) in die Ventil-Öffnungs-Stellung drückt.

6. Stuhl-Säule nach einem der Ansprüche 1 bis 5, **dadurch gekennzeichnet,**
**dass** zwischen dem Standrohr (1) und dem Gehäuse (6) eine Rückdreh-Einrichtung (23) vorgesehen ist.

7. Stuhl-Säule nach Anspruch 1 oder 2, **dadurch gekennzeichnet,**
**dass** die Dichtung (50) zwischen Schließ-Element (36") und Ventil-Körper (29') als Ringdichtung ausgebildet ist, die in einem das Schließ-Element (36") umgebenden ringzylindrischen Raum (52) im Ventil-Körper (29') zwischen einem ersten Anschlag (53) und einem zweiten Anschlag (54) verschiebbar angeordnet ist,
**dass** im Schließ-Element (36") ein den ersten Teil-Gehäuseraum (11) ständig mit dem Raum (52) verbindender Kanal (55, 56) ausgebildet ist und
**dass** die Dichtung (50) bei Belastung des Gehäuses (6) relativ zum Standrohr (1) am ersten Anschlag (53) anliegt und den Raum (52) gegenüber dem Ventil-Kanal (33') abdichtet und bei Entlastung des Gehäuses (6) ohne Verschiebung des Ventil-Stiftes (32") am zweiten Anschlag (54) anliegt und den Raum (52) gegenüber dem Ventil-Kanal (33') öffnet.

8. Stuhl-Säule nach Anspruch 7, **dadurch gekennzeichnet,**
**dass** der den ersten Teil-Gehäuseraum (11) ständig mit dem Raum (52) verbindende Kanal (55, 56) drosselnd ausgebildet ist.

## Claims

1. An adjustable-height chair column, comprising
- an upright tube (1) with a central longitudinal axis (3);
- a gas spring (4), which is disposed in the upright tube (1) coaxially of the central longitudinal axis (3), and which comprises
-- a casing (6) that is filled with pressure fluid and displaceable in a direction of the central longitudinal axis (3) into an extended position,
-- a piston rod (12) that is fixed in the upright tube (1),
-- a piston (14) that is mounted on the piston rod (12), dividing the casing into a first sectional casing chamber (11) and a second sectional casing chamber (15) the piston rod (12) passes through, and
-- a valve (9, 9', 9") for interconnection of the first and second sectional chamber (11, 15) which comprises
--- a valve gate (29, 29') with a valve throat (33, 33') that is coaxial of the central longitudinal axis (3),
--- a valve pin (32, 32', 32") that is disposed in the valve throat (33, 33') for displacement in a direction towards the first sectional casing chamber (11) into a position of opening, having a blocking element (36, 36', 36"), and
--- a seal (41, 50) that, in a shut-off condition of the valve (9, 9', 9") and upon load on the casing (6) in relation to the upright tube (1), seals between the blocking element (36, 36', 36") and the valve body (29, 29');
**characterized**
**in that** the valve (9, 9', 9") is designed for opening upon relief of the casing (6) in relation to the upright tube (1).

2. A chair column according to claim 1, **characterized**
**in that** the blocking element (36, 36', 36") has a greater diameter (d₃₆, d'₃₆, d"₃₆) than an adjoining valve-pin sector (48, 48') which is in permanent connection with the second sectional casing chamber (15).

3. A chair column according to claim 1 or 2, **characterized**
**in that** the seal (41) between the blocking element (36) and the valve body (29) is a lip seal with an internal sealing lip (45) which, upon load on the casing (6) in relation to the upright tube (1), rests on the blocking element (36) and, upon relief of the casing (6), lifts off the blocking element (36) without displacement of the valve pin (32).

4. A chair column according to one of claims 1 to 3, **characterized**
**in that**, between the valve pin (32) and the valve body (29), provision is made for a throttle gap (37) which is opened in a direction towards the position of opening upon displacement of the valve pin (32).

5. A chair column according to claim 1 or 2, **characterized**
**in that** the valve pin (32') is loaded by a spring (51) which presses the valve pin (32') into the position of opening upon relief of the casing (6) in relation to the upright tube (1).

6. A chair column according to one of claims 1 to 5, **characterized**
**in that** a mechanism of reverse rotation (23) is provided between the upright tube (1) and the casing (6).

7. A chair column according to claim 1 or 2, **characterized**
**in that** the seal (50) between the blocking element (36') and valve body (29') is an annular seal, which is disposed in the valve body (29') in an annular cylindrical space (52) that envelops the blocking element (29'), for displacement between a first stop (53) and a second stop (54);
**in that** a channel (55, 56) is provided in the blocking element (36"), permanently joining the first sectional casing chamber (11) to the space (52); and
**in that,** upon load on the casing (6) in relation to the upright tube (1), the seal (50) bears against the first stop (53), sealing the space (52) towards the valve throat (33') and, upon relief of the casing (6), bears against the second stop (54) without displacement of the valve pin (32"), opening the space (52) towards the valve throat (33').

8. A chair column according to claim 7, **characterized**
**in that** the channel (55, 56) which permanently connects the first sectional casing chamber (11) with the space (52) is formed for throttling action.

## Revendications

1. Colonne de chaise réglable en hauteur,
- avec un tube vertical (1) avec un axe longitudinal central (3),
- avec un ressort à gaz (4) disposé dans le tube vertical (1) de manière coaxiale par rapport à l'axe longitudinal central (3), qui présente
-- un logement (6) rempli avec un liquide sous pression et déplaçable dans le tube vertical (1) dans le sens de l'axe longitudinal central (3) jusqu'à une position avancée,
-- une tige de piston (12) fixée dans le tube vertical (1),
-- un piston (14) disposé sur la tige de piston (12) séparant le logement en une première chambre de logement partielle (11) et en une seconde chambre de logement partielle (15) traversée par la tige de piston (12) et
-- une soupape (9, 9', 9") destinée à relier la première et la seconde chambre de logement partielle (11, 15), qui présente
--- un corps de soupape (29, 29') avec un canal de soupape (33, 33') s'étendant de manière coaxiale par rapport à l'axe longitudinal central (3),
--- une tige de soupape (32, 32', 32") disposée dans le canal de soupape (33, 33') déplaçable vers la première chambre de logement partielle (11) dans une position d'ouverture avec un élément de fermeture (36, 36', 36") et
--- un joint (41, 50) à l'état fermé de la soupape (9, 9', 9") et en cas de chargement du logement (6) par rapport au tube vertical (1) formant étanchéité entre l'élément de fermeture (36, 36', 36") et le corps de soupape (29, 29'),
**caractérisée en ce que** la soupape (9, 9', 9") est conçue de telle sorte qu'elle s'ouvre lors du déchargement du logement (6) par rapport au tube vertical (1).

2. Colonne de chaise selon la revendication 1, **caractérisée en ce que** l'élément de fermeture (36, 36', 36'') présente un diamètre supérieur (d₃₆, d'₃₆, d"₃₆) à une section de tige de soupape (48, 48') se raccordant, qui est constamment reliée à la seconde chambre de logement partielle (15).

3. Colonne de chaise selon la revendication 1 ou 2, **caractérisé en ce que** le joint (41) entre l'élément de fermeture (36) et le corps de soupape (29) est conçu en tant que joint à lèvres avec une lèvre d'étanchéité interne (45), qui lors du chargement du logement (6) par rapport au tube vertical (1) repose sur l'élément de fermeture (36) et lors du déchargement du logement (6) sans déplacement de la tige de soupape (32) se lève de l'élément de fermeture (36).

4. Colonne de chaise selon l'une quelconque des revendications 1 à 3, **caractérisée en ce qu'**une fente d'étranglement (37) est formée entre la tige de soupape (32) et le corps de soupape (29), laquelle fente d'étranglement est ouverte lors du déplacement de la tige de soupape (32) vers la position d'ouverture.

5. Colonne de chaise selon la revendication 1 ou 2, **caractérisée en ce que** la tige de soupape (32') est chargée avec un ressort (51), qui comprime la tige de soupape (32') lors du déchargement du logement (6) par rapport au tube vertical (1) dans la position d'ouverture de la soupape.

6. Colonne de chaise selon l'une quelconque des revendications 1 à 5, **caractérisée en ce qu'**une installation de rappel (23) est prévue entre le tube vertical (1) et le logement (6).

7. Colonne de chaise selon la revendication 1 ou 2, **caractérisée en ce que** le joint (50) entre l'élément de fermeture (36") et le corps de soupape (29') est conçu en tant que joint annulaire, qui est disposé de manière déplaçable dans une chambre cylindrique annulaire (52) entourant l'élément de fermeture (36") dans le corps de soupape (29') entre une première butée (53) et une seconde butée (54),
**en ce qu'**un canal (55, 56) reliant constamment la première chambre de logement partielle (11) et la chambre (52) est formé dans l'élément de fermeture (36") et
**en ce que** le joint (50) lors du chargement du logement (6) par rapport au tube vertical (1) repose sur la première butée (53) et ferme de manière étanche la chambre (52) par rapport au canal de soupape (33') et lors du déchargement du logement (6) sans déplacement de la tige de soupape (32") repose sur la seconde butée (54) et ferme la chambre (52) par rapport au canal de soupape (33').

8. Colonne de chaise selon la revendication 7, **caractérisée en ce que** le canal (55, 56) reliant constamment la première chambre de logement partielle (11) et la chambre (52) est conçu de manière obturante.
